# EUROPÄISCHE PATENTANMELDUNG

(11) **EP 1 837 366 A1**
(43) Veröffentlichungstag der Anmeldung: **26.09.2007**
(21) Anmeldenummer: 06111635.6
(22) Anmeldetag: 23.03.2006
(51) Int. Cl.: C08K 3/22, C08K 3/26, C08K 3/32, C08J 3/215, C08J 3/22, C08L 21/00

(54) **Zusammensetzung mit Zinkhydroxid, Mischung enthaltend die Zusammensetzung und Artikel daraus**

(71) Anmelder: Grillo Zinkoxid GmbH, 38611 Goslar-Oker (DE)
(72) Erfinder: Jahn, Burkhardt, 38667 Harzburg (DE); Hessdörfer, Sven, 97753 Karlburg (DE); Rennar, Nikolaus, 97294 Unterpleichfeld (DE)
(74) Vertreter: Meyers, Hans-Wilhelm

(57) **Zusammenfassung**

Es wird eine Zusammensetzung offenbart, die enthält wenigstens einen Dienkautschuk oder wenigstens ein Copolymer eines Dienkautschuks und/oder Mischungen davon und Zinkhydroxid und/oder basisches Zinkcarbonat und/oder Zinkphosphat. Die Zusammensetzung ist als Masterbatch geeignet und kann zur Herstellung von vulkanisierbaren Mischungen mit geringerer Zinkbelastung eingesetzt werden.

## Beschreibung

Die Erfindung betrifft eine Zusammensetzung mit Zinkhydroxid, basischem Zinkcarbonat und/oder -phosphat, Mischungen enthaltend die Zusammensetzung, ein Verfahren zur Herstellung der Zusammensetzung, Artikel aus der erfindungsgemäßen Mischung sowie die Verwendung von nicht calziniertem Zinkhydroxid, basischem Zinkcarbonat und/oder Zinkphosphat.
Aufgrund ihres technologisch interessanten Eigenschaftsbildes nehmen Elastomere eine Schlüsselstellung unter den verschiedenen Werkstoffgruppen ein. In weiten Grenzen reversibel deformierbare Gummimaterialien mit mittlerem Leistungsspektrum, d.h. chemisch weitmaschig vernetzte Polymere, lassen sich im einfachsten Fall üblicherweise durch "Vulkanisation" von Dienkautschuken herstellen. "Vulkanisation" bezeichnet dabei eine spezielle Art der Vernetzung, wodurch die einzelnen miteinander verschlauften, chemisch aber unvernetzten Makromoleküle des plastischen Kautschuks weitmaschig über mehratomige Schwefelbrücken kovalent miteinander verbunden werden.
Das älteste und zugleich immer noch wichtigste Vulkanisiermittel ist nach wie vor Schwefel. Zur Erreichung bestimmter mechanischer Festigkeitswerte, chemischer und dynamisch-mechanischer Eigenschaften, aber auch zur Beschleunigung der eigentlichen Vernetzungsreaktion ist der Zusatz von organischen Vulkanisationsbeschleunigern, -aktivatoren und Fettsäuren sowie von weiteren Kautschukadditiven (Füllstoffe, Weichmacher, Verarbeitungshilfsmittel, Alterungsschutzmittel etc.) jedoch unerlässlich. Von großem Vorteil für den industriellen Einsatz des Vulkanisationsverfahrens ist die relative Unempfindlichkeit der (beschleunigten) Schwefelvernetzung gegenüber den meisten Mischungsbestandteilen sowie gegenüber Wasser und Sauerstoff. Darüber hinaus sind für dieses Verfahren charakteristisch die hohe Wirtschaftlichkeit des Prozesses und die hervorragende Regelbarkeit der Vulkanisationsgeschwindigkeit mittels Beschleuniger und Verzögerer und mittels der relativ leicht einzustellenden Verfahrensparameter Vernetzungstemperatur und Vernetzungsdauer. Die Möglichkeit, durch Art und Menge der Beschleuniger sowie durch die Schwefeldosierung zugleich die Länge und die Struktur der Vernetzungsbrücken zu beeinflussen, ist für dieses Verfahren weiterhin von Bedeutung. So kann man z.B. entweder die Bildung von vorwiegend polysulfidischen Vernetzungsbrücken mit guten elastischen Eigenschaften und hoher Zugfestigkeit der Vulkanisate oder von vorwiegend mono- bzw. disulfidischen Vernetzungsbrücken mit guter Wärmebeständigkeit der Vulkanisate erreichen. Dem Fachmann sind Kenntnisse über die Optimierung eines gegebenen Schwefel-Beschleuniger-Systems unter Berücksichtigung von Verarbeitungssicherheit, Vulkanisationsdauer und -temperatur, Vernetzungsart und gewünschter technologischer Eigenschaften geläufig.
Der Mechanismus der Schwefelvulkanisation ist bis heute Gegenstand zahlreicher Untersuchungen. Prinzipiell muss zwischen der technologisch wenig bedeutenden beschleunigerfreien und der technisch relevanten beschleunigten Vulkanisation unter Verwendung von Schwefel-Beschleuniger-Systemen und Aktivatoren unterschieden werden. Es ist bekannt, dass Metalloxide in Verbindung mit Fettsäuren aktivierend auf Schwefel-Beschleuniger-Systeme wirken. Häufig verwendet man Zinkoxid als Aktivator, aber auch Bleioxid und Magnesiumoxid werden eingesetzt. Die Rolle des Zinkoxids beschränkt sich dabei jedoch nicht nur auf die Rolle eines Vulkanisationsaktivators bei der Schwefelvernetzung; ZnO kann u.U. auch noch folgende Funktionen erfüllen:
- Vernetzungsmittel für halogenhaltige Kautschuke,
- Vernetzungsmittel für Carboxylgruppen-haltige Polymere ("Salzvernetzung"),
- Säurefänger bei der Peroxid-Vernetzung,
- heller Füllstoff zur Verbesserung der elastischen Eigenschaften und der Hitzebeständigkeit bei dynamischer Belastung.

Obwohl die kautschukverarbeitende Industrie Zinkoxid nur in moderaten Dosierungen und in Kombination mit Fettsäuren seit Jahrzehnten erfolgreich bei der Vulkanisation von Kautschuken einsetzt, werden in jüngster Zeit Forderungen nach einer Reduzierung des Zinkoxidgehaltes in Gummiartikeln wegen einer potentiellen Umweltbelastung mit diesem Schwermetall immer lauter. Das der Erfindung zugrunde liegende technische Problem bestand darin, einen Vulkanisationsaktivator zur Verfügung zu stellen, der mit geringeren Schwermetallmengen belastet ist. Der bereitzustellende Vulkanisationsaktivator soll weiterhin die folgenden Eigenschaften aufweisen:
- hohe vulkanisationsaktive Wirksamkeit,
- keine negative Beeinflussung des Alterungsverhaltens der Vulkanisate,
- leichte Dosierbarkeit,
- gute Dispergierbarkeit in der Kautschukmischung,
- keine Stippenbildung,
- keine bzw. geringe Staubentwicklung,
- chemische Beständigkeit,
- gute Lagerfähigkeit auch bei höheren Umgebungstemperaturen.
Gelöst wird das der Erfindung zugrunde liegende Problem durch eine Zusammensetzung enthaltend:
a) wenigstens einen Dienkautschuk und/oder wenigstens ein Bipolymer eines konjugierten Diens und einer aromatischen Vinylverbindung, ein Bipolymer eines konjugierten Diens und einem monoolefinischen Monomer, ein entsprechendes Terpolymer oder Kombinationen davon sowie
b) Zinkhydroxid, basisches Zinkcarbonat, Zinkphosphat oder Kombinationen davon.

Die erfindungsgemäße Zusammensetzung kann in Form eines Masterbatches als Vulkanisationsaktivator in der Kautschukindustrie formuliert werden. Die erfindungsgemäße Zusammensetzung kann für die Herstellung und den Einsatz von Masterbatchen aus einem kautschukartigen Polymer und nasschemisch gewonnenem Zinkhydroxid, basischem Zinkhydroxid, Zinkphosphat oder Kombinationen davon eingesetzt werden, die als Vulkanisationsaktivatoren mit effizienterer Vernetzungscharakteristik bei der beschleunigten Schwefelvernetzung von Dienkautschuken dienen und somit zu einer Verminderung der potentiellen Umweltbelastung durch Schwermetalle führen.
In einer Ausführungsform der erfindungsgemäßen Zusammensetzung enthält diese als Bipolymer ein konjugiertes Dien und eine aromatische Vinylverbindung, ein konjugiertes Dien und ein monoolefinisches Monomer, ein entsprechendes Terpolymer oder Kombinationen davon, wobei das Terpolymer aus einem Dien, einer aromatischen Vinylverbindung und einem monoolefinischen Monomer erhältlich ist.
In einer weiteren Ausführungsform sind das Zinkhydroxid, basisches Zinkcarbonat und/oder Zinkphosphat nasschemisch gefällte Feststoffe.
Erfindungsgemäß kann der Dienkautschuk aus Dienkautschuk-Monomeren aufgebaut sein, die ausgewählt sind aus der Gruppe bestehend aus Butadien-(1,3), Isopren, 2,3-Dimethyl-butadien-(1,3), Chloropren, Pentadien-(1,3), Hexadien und Gemischen davon.
Die aromatischen Vinyl-Monomere können ausgewählt sein aus der Gruppe bestehend aus Styrol, α-Methyl-styrol, p-Methyl-styrol, o-Methyl-styrol, p-Butyl-styrol, Vinylnaphthalin und Gemischen davon.
Als mono-olefinisches Monomer kann erfindungsgemäß eingesetzt werden ein Monomer, das ausgewählt ist aus der Gruppe bestehend aus Acrylnitril, Methacrylnitril und Gemischen davon.
Die erfindungsgemäße Zusammensetzung weist z.B. 10 bis 90 Gewichtsteile Polymer, insbesondere 40 bis 60 Gewichtsteile Polymer und 90 bis 10 Gewichtsteilen Zinkhydroxid, basisches Zinkcarbonat und/oder Zinkphosphat, insbesondere 60 bis 40 Gewichtsteile Zinkhydroxid und/oder Zinkcarbonat und/oder Zinkphosphat auf.

Üblicherweise kann die erfindungsgemäße Zusammensetzung in Form von Fellen und/oder Pellets zubereitet werden, wenn diese als Masterbatch eingesetzt wird. Masterbatche haben den Vorteil einer standardisierten Zusammensetzung, was im industriellen Fertigungsprozess zu einer einfachen Handhabung führt.
Erfindungsgemäß beansprucht wird auch ein Verfahren zur Herstellung der erfindungsgemäßen Zusammensetzung. Dabei wird zu einer alkalischen Zinkat-Lösung eine Polymer-Dispersion hinzugesetzt und Zinkhydroxid, basisches Zinkcarbonat, Zinkphosphat oder deren Kombinationen sowie Kautschuk (wenn Latex eingesetzt) ausgefällt.
In einer Ausgestaltung des erfindungsgemäßen Verfahrens wird eine verdünnte wässrige alkalische Zinkat-Lösung mit einem Zinkgehalt von 0,4-1,6 mol/l eingesetzt. Als Polymerdispersion wird z.B. ein Polymerlatex mit einem Feststoffanteil von 3-30 Gew.-%, insbesondere 3-10 Gew.-% eingesetzt.
In einer besonderen Ausgestaltung des erfindungsgemäßen Verfahrens werden unter Rühren durch Absenkung des pH-Wertes Zinkhydroxid und/oder basisches Zinkcarbonat und/oder Zinkphosphat sowie und Kautschuk in fein verteilter Form simultan ausgefällt. Die Absenkung des pH-Wertes erfolgt beispielsweise durch Zugabe einer Brönsted-Säure oder durch Einleiten von Kohlendioxid-Gas. Die Brönstedt-Säure ist dabei z.B. ausgewählt aus der Gruppe bestehend aus Salzsäure, Schwefelsäure, Phosphorsäure oder Essigsäure.
Gegenstand der Erfindung ist ebenfalls eine vulkanisierbare Mischung, die die erfindungsgemäße Zusammensetzung umfasst. Im Besonderen enthält die erfindungsgemäße vulkanisierbare Mischung
a) die erfindungsgemäße Zusammensetzung,
b) wenigstens einen weiteren Matrix-Kautschuk,
c) Vernetzungsmittel,
d) gegebenenfalls Füllstoffe,
e) gegebenenfalls Weichmacher,
f) gegebenenfalls Alterungsschutzmitteln,
g) gegebenenfalls weitere Kautschukadditive.
Der weitere Matrix-Kautschuk ist beispielsweise ein Dienkautschuk und/ oder Dienkautschuk-Copolymer.
Die erfindungsgemäße Mischung ist z.B. mit 100 Gewichtsteilen Matrixkautschuk, 0,5-10 Gewichtsteilen der Zusammensetzung nach einem der Ansprüche 1 bis 7, 0-90 Gewichtsteilen Füllstoffe, 0-50 Gewichtsteilen Weichmacher versehen.
Das Vernetzungsmittel ist beispielsweise Schwefel oder ein Schwefelspender und Gemische davon.
In einer Ausführungsform der Erfindung ist der Füllstoff ein fein verteilter schwarzer oder heller, aktiver Füllstoff. Eine feine Verteilung der Füllstoffe wird dadurch erreicht, dass Füllstoffperlen und Agglomerate während des Mischprozesses aufgebrochen, mit Polymer durchdrungen und beispielsweise durch disperses und distributives Mischen die resultierenden 20-350 nm großen Aggregate homogen in der Kautschukmischung verteilt werden. Ein aktiver (verstärkender) Füllstoff kann dabei durch die Wechselwirkung mit der Kautschukmatrix dis Viskosität der Mischung beträchtlich erhöhen und verbessert ebenfalls das Bruchverhalten des Vulkanisates. So wird regelmäßig bei inaktiven Füllstoffen mit steigendem Füllstoffanteil eine stetige Abnahme, bei aktiven Füllstoffen jedoch ein Maximum der Bruchenergiedichte (Integral der Spannungs-Dehnungskurve) beobachtet.
Das Alterungsschutzmittel für die erfindungsgemäße Mischung ist z.B. ausgewählt ist aus der Gruppe bestehend aus p-Phenylendiamin-Derivaten, Dihydrochinolin-Derivaten, Naphthylamin-Derivaten, Diphenylamin-Derivaten, Benzimidazol-Derivaten, Bisphenol-Derivaten und Monophenol-Derivaten.
Der Weichmacher für die erfindungsgemäße Mischung ist beispielsweise ausgewählt aus der Gruppe bestehend aus aromatischen, naphthenischen, paraffinischen Mineralölweichmachern sowie synthetischen Weichmacherölen wie z.B. Ester-, Ether- und Polymerweichmacher und halogenierten Paraffinen. Die weiteren üblichen Kautschukadditive können ausgewählt sein aus der Gruppe bestehend aus Verarbeitungshilfen wie z.B. Seifen, Wachse, Harze; sonstige Zusätze wie z.B. Farbstoffe, Treibmittel, Flammschutzmittel, Haftmittel, Antistatika; Vulkanisationsbeschleuniger, Vulkanisationsverzögerer. Gegenstand der Erfindung ist auch ein Verfahren zur Herstellung der erfindungsgemäßen Mischung, wobei die Komponenten auf Mischapparaturen wie z.B. Innenmischer, Walzwerk, Extruder prozessiert werden.
Gegenstand der Erfindung sind ferner Artikel erhältlich durch Vulkanisieren der erfindungsgemäßen vulkanisierbaren Mischung.
Beispielsweise können als Artikel gemäß der Erfindung Fahrzeugreifen, Förderbänder, Riemen, Federungselemente, Profile, Dichtungen, Schläuche, Bladder, Walzen, medizinische Artikel, Sportartikel, Gummischuhe und -sohlen, Kabel hergestellt werden.
Auch die Verwendung der erfindungsgemäßen Mischung für die Herstellung von Fahrzeugreifen, technischen Gummiartikeln ist Gegenstand der Erfindung sowie die Verwendung von nicht calziniertem Zinkhydroxyd als Vulkanisationsaktivator.
Die Erfindung wird anhand der folgenden Beispiele näher erläutert.

### Beispiel 1:

100 g Zinkoxid werden mit ca. 400 ml entionisiertem Wasser aufgeschlämmt und unter Rühren und gegebenenfalls unter Erwärmen portionsweise mit der 1,5-2 fachen äquimolaren Menge halbkonzentrierter Schwefelsäure versetzt; evtl. ungelöste Anteile trennt man durch Filtration ab. Zu der entstandenen klaren Zinksalzlösung lässt man nun unter intensivem Rühren konzentrierte (ca. 12,5-molare) Natronlauge aus einem Tropftrichter einfließen, bis die Lösung einen pH-Wert von ungefähr 7 aufweist. Der sich bildende amorphe Niederschlag wird abgenutscht, mit entionisiertem Wasser erneut aufgeschlämmt und abermals abgetrennt. Diese Prozedur wird so oft wiederholt, bis das Waschwasser mit Bariumchloridlösung keine Trübung mehr zeigt. Der abgenutschte, noch feuchte Filterkuchen wird jetzt in wenig Wasser aufgeschlämmt. Unter intensivem Rühren und gegebenfalls unter gelindem Erwärmen wird so viel konzentrierte (ca. 12,5-molare) Natronlauge hinzugegeben, bis sich der gesamte Feststoff nahezu vollständig aufgelöst hat; eventuell vorhandene unlösliche Anteile trennt man durch Filtrieren ab. 1300 ml der so gewonnenen alkalischen, ca. 0,7-molaren Zinklösung werden nun sukzessive unter intensivem Rühren mit 785 ml eines verdünnten ölfreien Styrol-Butadien-Latex (Feststoffanteil ca. 7 Gew.-%) vermischt; durch anschließende Zugabe von halbkonzentrierter Schwefelsäure wird der pH-Wert auf < 6 abgesenkt. Bei optimaler Arbeitsweise bildet sich ein feinteiliger amorpher Niederschlag, der durch Filtration oder durch Zentrifugieren von der überstehenden Lösung abgetrennt und mehrmals gründlich ausgewaschen wird. Der anschließend bei 70 °C im Vakuumtrockenschrank sorgfältig getrocknete Feststoff wird im letzten Verarbeitungsschritt auf einem Walzwerk (gegebenfalls unter Zusatz von ca. 5-10 Gew.-% eines Weichmacheröls) zu einem zusammenhängenden Mischungsfell kompaktiert und bei Bedarf pelletiert.

### Beispiel 2:

100 g Zinkoxid werden mit der doppelten Menge gepulvertem Natriumcarbonat (alternativ einer 1:1-Mischung aus gepulvertem Natriumcarbonat und Kaliumcarbonat) intensiv vermischt und in einem feuerfesten Tiegel bei einer Temperatur von 1000 - 1100 °C in einem Muffelofen zwölf Stunden lang geglüht. Das abgekühlte, mechanisch zerkleinerte Sinterprodukt wird wiederholt mit heißer Natronlauge ausgelaugt und der ungelöste Rückstand durch Filtrieren abgetrennt. 900 ml der so gewonnenen alkalischen, etwa 0,7-molaren Zinklösung werden nun sukzessive unter intensivem Rühren mit 785 ml eines verdünnten Naturkautschuk-Latex (4 Gew.-% Feststoffanteil) vermischt; durch anschließendes Einleiten von Kohlendioxidgas wird der pH-Wert auf < 6 abgesenkt. Der gebildete feinteilige amorphe Niederschlag wird durch Filtration oder durch Zentrifugieren von der überstehenden Lösung abgetrennt und mehrmals ausgewaschen. Der noch feuchte Feststoff wird anschließend bei 70 °C im Vakuumtrockenschrank getrocknet und (bei Bedarf unter Zusatz von 5-10 Gew.-% eines Weichmacheröls) zu einem zusammenhängenden Mischungsfell kompaktiert sowie gegebenenfalls pelletiert.

### Beispiel 3:

100 g Zinkoxid werden mit 120 g gepulverten Natriumhydroxid intensiv vermischt und in einem feuerfesten Tiegel mit Deckel drei Stunden lang mittels eines Gebläses oder in einem Muffelofen so erhitzt, dass ein klarer Schmelzfluss entsteht. Der erkaltete Schmelzkuchen wird mechanisch zerkleinert, wiederholt mit kochendem Wasser ausgelaugt und vom ungelösten Rückstand abfiltriert. 1100 ml der so gewonnenen alkalischen Zinklösung werden nun sukzessive unter intensivem Rühren mit 800 ml eines verdünnten Acrylnitril-Butadien-Latex (Feststoffanteil < 10 Gew.-%) vermischt; durch anschließendes Einleiten von Kohlendioxidgas wird der pH-Wert auf < 5,5 abgesenkt. Es bildet sich ein feinteiliger amorpher Niederschlag, der durch Filtration oder durch Zentrifugieren von der überstehenden Lösung abgetrennt und mehrmals gründlich ausgewaschen wird. Der noch feuchte Feststoff wird anschließend bei 70 °C im Vakuumtrockenschrank getrocknet und (bei Bedarf unter Zusatz von 5-10 Gew.-% eines Weichmacheröls) zu einem zusammenhängenden Mischungsfell kompaktiert und gegebenenfalls pelletiert.

## Patentansprüche

1. Zusammensetzung enthaltend:
a) wenigstens einen Dienkautschuk, wenigstens ein Bipolymer eines konjugierten Diens und einer aromatischen Vinylverbindung, ein Bipolymer eines konjugierten Diens und einem monoolefinischen Monomer, ein entsprechendes Terpolymer oder Kombinationen davon, wobei das Terpolymer aus einem Dien, einer aromatischen Vinylberbindung und einem monoolefinischen Monomer erhältlich ist, sowie
b) Zinkhydroxid, basisches Zinkcarbonat, Zinkphosphat oder Kombinationen davon.

2. Zusammensetzung nach Anspruch 1, wobei der Dienkautschuk aus Dienkautschuk-Monomeren aufgebaut ist, die ausgewählt sind aus der Gruppe bestehend aus Butadien-(1,3), Isopren, 2,3-Dimethyl-butadien-(1,3), Chloropren, Pentadien-(1,3), Hexadien und Gemischen davon.

3. Zusammensetzung nach Anspruch 1 und 2, wobei die aromatischen Vinyl-Monomere des Bipolymers ausgewählt sind aus der Gruppe bestehend aus Styrol, α-Methyl-styrol, p-Methyl-styrol, o-Methyl-styrol, p-Butyl-styrol, Vinylnaphthalin und Gemischen davon.

4. Zusammensetzung nach mindestens einem der Ansprüche 1 bis 3, wobei das monoolefinische Monomer des Bipolymers ausgewählt ist aus der Gruppe bestehend aus Acrylnitril, Methacrylnitril und Gemischen davon.

5. Zusammensetzung nach mindestens einem der Ansprüche 1 bis 4, wobei das Zinkhydroxid, basische Zinkcarbonat und/oder Zinkphosphat nasschemisch gefällte Feststoffe sind.

6. Zusammensetzung nach mindestens einem der Ansprüche 1 bis 5 mit 10 bis 90 Gewichtsteilen Polymer, insbesondere 40 bis 60 Gewichtsteilen Polymer und 90 bis 10 Gewichtsteilen Zinkhydroxid, basischem Zinkcarbonat und/oder Zinkphosphat, insbesondere 60 bis 40 Gewichtsteilen Zinkhydroxid, basischem Zinkcarbonat und/oder Zinkphosphat.

7. Zusammensetzung nach mindestens einem der Ansprüche 1 bis 6 in Form von Fellen und/oder Pellets.

8. Verfahren zur Herstellung der Zusammensetzung nach mindestens einem der Ansprüche 1 bis 7 **dadurch gekennzeichnet, dass** zu einer alkalischen Zinkat-Lösung eine Polymer-Dispersion hinzugesetzt wird und Zinkhydroxid, basisches Zinkcarbonat und/oder Zinkphosphat sowie Kautschuk ausgefällt werden.

9. Verfahren nach Anspruch 8, wobei eine verdünnte wässrige alkalische Zinkat-Lösung mit einem Zinkgehalt von 0,4 - 1,6 mol/l eingesetzt wird.

10. Verfahren nach Anspruch 8 und/oder 9, wobei als Polymerdispersion ein Polymerlatex mit einem Feststoffanteil von 3-30 Gew.-%, insbesondere 3-10 Gew.-% eingesetzt wird.

11. Verfahren nach mindestens einem der Ansprüche 8 bis 10, wobei unter Rühren durch Absenkung des pH-Wertes Zinkhydroxid, basischem Zinkcarbonat und/oder Zinkphosphat sowie Kautschuk in fein verteilter Form im Wesentlichen simultan ausgefällt werden.

12. Verfahren gemäß Anspruch 11, wobei die Absenkung des pH-Wertes durch Zugabe einer Brönsted-Säure oder durch Einleiten von Kohlendioxid-Gas erfolgt.

13. Verfahren gemäß Anspruch 12, wobei die Brönsted-Säure ausgewählt ist aus der Gruppe bestehend aus Salzsäure, Schwefelsäure, Phosphorsäure oder Essigsäure.

14. Vulkanisierbare Mischung enthaltend:
a) die Zusammensetzung gemäß mindestens einem der Ansprüche 1 bis 7,
b) wenigstens einen weiteren Matrix-Kautschuk,
c) Vernetzungsmittel,
d) gegebenenfalls Füllstoffe,
e) gegebenenfalls Weichmacher,
f) gegebenenfalls Alterungsschutzmitteln,
g) gegebenenfalls weitere Kautschukadditive.

15. Mischung nach Anspruch 14, wobei der weitere Matrix-Kautschuk ein Dienkautschuk und/ oder Dienkautschuk-Copolymer ist.

16. Mischung nach mindestens einem der Ansprüche 14 oder 15 mit 100 Gewichtsteilen Matrixkautschuk, 0,5 - 20 Gewichtsteilen, insbesondere 0,5 - 10 Gewichtsteilen der Zusammensetzung nach einem der Ansprüche 1 bis 7, 0 - 90 Gewichtsteilen Füllstoffe, 0-50 Gewichtsteilen Weichmacher.

17. Mischung nach mindestens einem der Ansprüche 14 bis 16, wobei das Vernetzungsmittel Schwefel, Schwefelspender und Gemische davon ist.

18. Mischung nach mindestens einem der Ansprüche 14 bis 17, wobei der Füllstoff ein fein verteilter schwarzer oder heller, aktiver Füllstoff ist.

19. Mischung nach mindestens einem der Ansprüche 14 bis 18, wobei das Alterungsschutzmittel ausgewählt ist aus der Gruppe bestehend aus p-Phenylendiamin-Derivaten, Dihydrochinolin-Derivaten, Naphthylamin-Derivaten, Diphenylamin-Derivaten, Benzimidazol-Derivaten, Bisphenol-Derivaten und Monophenol-Derivaten.

20. Mischung nach mindestens einem der Ansprüche 14 bis 19, wobei der Weichmacher ausgewählt ist aus der Gruppe bestehend aus aromatischen, naphthenischen, paraffinischen Mineralölweichmachern sowie synthetischen Weichmacherölen wie z.B. Ester-, Ether- und Polymerweichmacher und halogenierten Paraffinen.

21. Mischung nach mindestens einem der Ansprüche 14 bis 20, wobei die weiteren üblichen Kautschukadditive ausgewählt sind aus der Gruppe bestehend aus Verarbeitungshilfen wie z.B. Seifen, Wachse, Harze; sonstige Zusätze wie z.B. Farbstoffe, Treibmittel, Flammschutzmittel, Haftmittel, Antistatika; Vulkanisationsbeschleuniger, Vulkanisationsverzögerer.

22. Verfahren zur Herstellung der Mischung gemäß mindestens einem der Ansprüche 14 bis 21, wobei die Komponenten auf Mischapparaturen wie z.B. Innenmischer, Walzwerk, Extruder prozessiert werden.

23. Artikel erhältlich durch Vulkanisieren der vulkanisierbaren Mischung gemäß mindestens einem der Ansprüche 14 bis 22.

24. Artikel gemäß Anspruch 23 ausgewählt aus der Gruppe bestehend aus Fahrzeugreifen, Förderbändern, Riemen, Federungselementen, Profilen, Dichtungen, Schläuchen, Bladdern, Walzen, medizinischen Artikeln, Sportartikeln, Gummischuhen und Gummisohlen, Kabeln.

25. Verwendung der Mischung gemäß mindestens einem der Ansprüche 14 bis 21 für die Herstellung von Fahrzeugreifen, technischen Gummiartikeln und gummierten Geweben.

26. Verwendung von nicht calziniertem Zinkhydroxyd, nicht calziniertem basischem Zinkcarbonat und/oder nicht calziniertem Zinkphosphat als Vulkanisationsaktivator.
